# EUROPÄISCHE PATENTSCHRIFT

(11) **EP 1 874 662 B1**
(45) Veröffentlichungstag und Bekanntmachung des Hinweises auf die Patenterteilung: **03.03.2010**
(21) Anmeldenummer: 06725583.6
(22) Anmeldetag: 05.04.2006
(51) Int. Cl.: B65G 11/10

(54) **FLEXIBLE RINNE FÜR DIE ZUFÜHRUNG VON GEGENSTÄNDEN**
FLEXIBLE OBJECT SUPPLY CHANNEL
CONDUIT FLEXIBLE POUR ACHEMINER DES OBJETS

(30) Priorität: 20.04.2005 DE 102005018406
(43) Veröffentlichungstag der Anmeldung: 09.01.2008
(73) Patentinhaber: Robert Bosch GmbH, 70442 Stuttgart (DE)
(72) Erfinder: TEWALD, Matthias, 71522 Backnang (DE); GREIF, Tobias, 70734 Fellbach (DE)
(86) Internationale Anmeldenummer: PCT/EP2006/061353
(87) Internationale Veröffentlichungsnummer: WO 2006/111474

(56) Entgegenhaltungen:
- EP-A- 1 270 458
- US-A- 2 744 601
- US-A- 3 285 387

## Beschreibung

### Stand der Technik

Die Erfindung geht aus von einer flexiblen Rinne für die Zuführung von Gegenständen nach der Gattung des unabhängigen Anspruchs wie sie aus der US-A-2 744 601 bekannt ist. Als Zuführungselemente kommen beispielsweise starre, gefräste Rinnensegmente zum Einsatz, bei denen die Flexibilität über eine gelenkige Lagerung der Segmente miteinander erreicht wird. Die zuzuführenden Gegenstände werden über Staudruck (Schwerkraft) beispielsweise einer Siegelstation von innen liegenden Kaffeeentgasungsventilen bereitgestellt. Diese Rinnen sind jedoch sehr lang und wegen der Bearbeitungsintensität teuer. Übergänge zwischen den Segmenten erschweren die Zuführung. So ist eine genaue Ausführung der Rinne beispielsweise zwischen einem Fördertopf und einer Siegelstation erforderlich. Weiterhin ist es bekannt, starre, gefräste und gebogene Rinnen zu verwenden. Da die Rinne starr ist, wird beispielsweise ein Fördertopf zu einer Siegelstation ausgerichtet. Die zuzuführenden Gegenstände werden über Staudruck (Schwerkraft) der Siegelstation bereitgestellt. Hierbei ist jedoch eine Verstelleinheit des Fördertopfes notwendig. Die Justierung gestaltet sich aufwändig, da Fördertopf und Siegelstation immer genau zueinander ausgerichtet sein müssen. Gleiches gilt ebenfalls für eine starr gefräste Rinne. Weiterhin ist auch die Zuführung über einen Profilschlauch zwischen Fördertopf und Siegelstation bekannt. Die zuzuführenden Gegenstände werden einzeln oder zusammen durch den Profilschlauch geblasen. Nachteilig hierbei sind die hohen Herstellkosten für den Schlauch. Auch die Übergänge zwischen Schlauch und Fördertopf/Siegelstation sind nicht einfach zu bewerkstelligen. Da der Biegeradius relativ groß sein muss, erhöht sich die Länge der Schläuche. Unter Umständen kann Blasluft dem zuzuführenden Gegenstand schaden. Auch der Druckluftverbrauch ist nachteilhaft.

Aus der US-A-2744601 ist bereits eine flexible Rinne bekannt zum Transport kleiner Maschinenteile. Die flexible Rinne umfasst ein Paar rechteckförmiger, in Längsrichtung sich erstreckender bandartiger Platten, die voneinander beabstandet ausgebildet sind. Diese Platten sind an jeder Seite mit Abstandshaltern versehen.

### Vorteile der Erfindung

Die erfindungsgemäße flexible Rinne gemäß den Merkmalen des unabhängigen Anspruchs hat demgegenüber den Vorteil, dass sie einfach zu montieren und kostengünstig herzustellen ist, da auf teure Herstellwerkzeuge verzichtet werden kann. Werden die zuzuführenden Gegenstände in einem Fördertopf bereitgestellt, für beispielsweise eine Siegeleinheit, so kann der Fördertopf räumlich getrennt, aber ortsfest auf einer Platte montiert werden. Durch die flexible Rinne kann die Siegeleinheit unabhängig vom Topf verstellt werden, damit die zuzuführenden Gegenstände immer genau auf der Folienbahn positioniert werden können.

Die Rinne wird aus einfachen Halbmaterialien, Norm- und Fertigungsteilen hergestellt und ist somit kostengünstig. Die Übergänge Fördertopf/Rinne und Rinne/Siegelstation sind sehr einfach und haben keine Stolperkanten. Die Position von Fördertopf und Siegelstelle können in zwei Dimensionen nahezu beliebig auseinander liegen. Es ist lediglich auf einen so großen Höhenunterschied zu achten, dass der minimale Staudruck zum Weitertransport der zuzuführenden Gegenstände in der Rinne gewährleistet ist. Durch die eingesetzten Materialien ist die Reibung in der Rinne sehr niedrig. Die zuzuführenden Gegenstände rutschen sehr leicht durch.

Weitere Vorteile und vorteilhafte Weiterbildungen der erfindungsgemäßen flexiblen Rinne ergeben sich aus den abhängigen Ansprüchen und aus der Beschreibung.

### Zeichnung

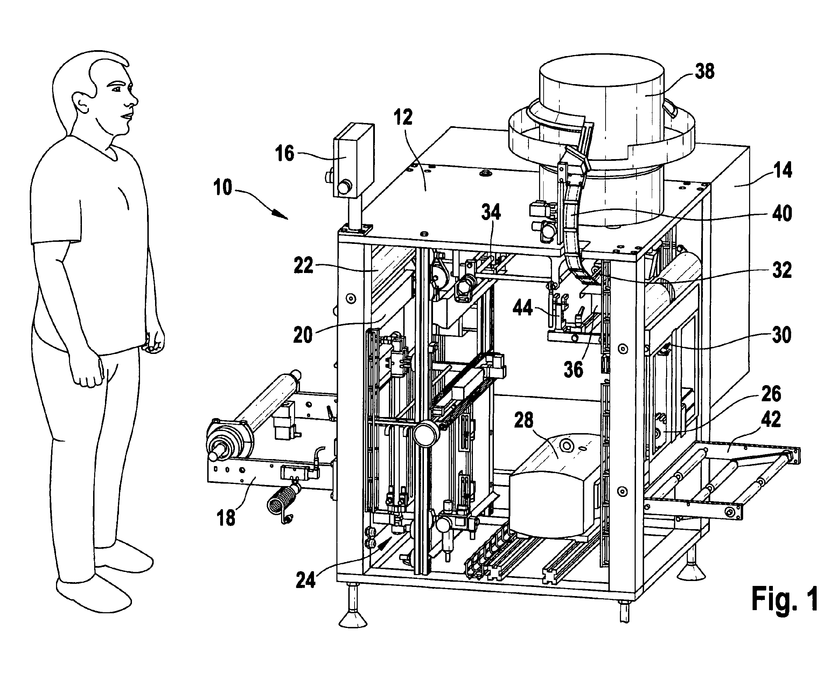

Ein Ausführungsbeispiel der Erfindung ist in der Zeichnung dargestellt und wird in der nachfolgenden Beschreibung näher erläutert. Es zeigen
Figur 1 eine perspektivische Ansicht eines eigenständig arbeitenden Applikationsmoduls ohne Darstellung des Verpackungsmaterials,
Figur 2 eine Seitenansicht mit Folie, aber ohne Gestell,

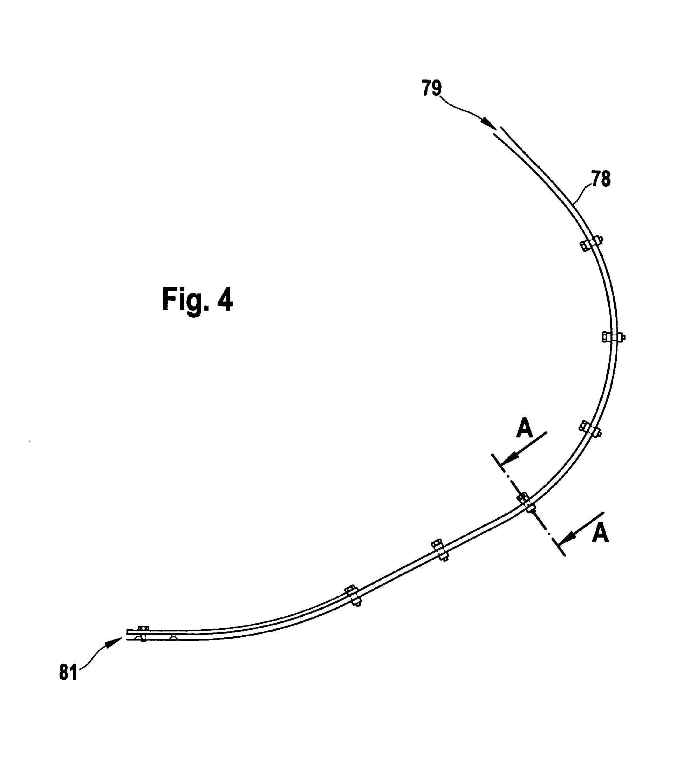

die Figur 3 eine isometrische Darstellung der in Figur 2 gezeigten Anordnung, Figur 4 eine Seitenansicht der im Applikationsmodul zum Einsatz kommenden flexiblen Rinne,

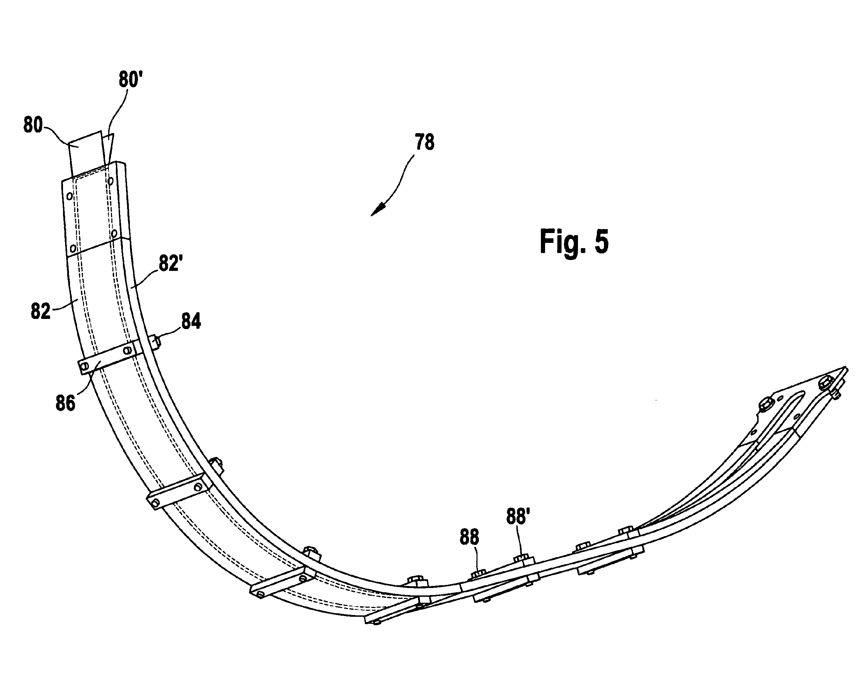

die Figur 5 eine perspektivische Darstellung der flexiblen Rinne sowie

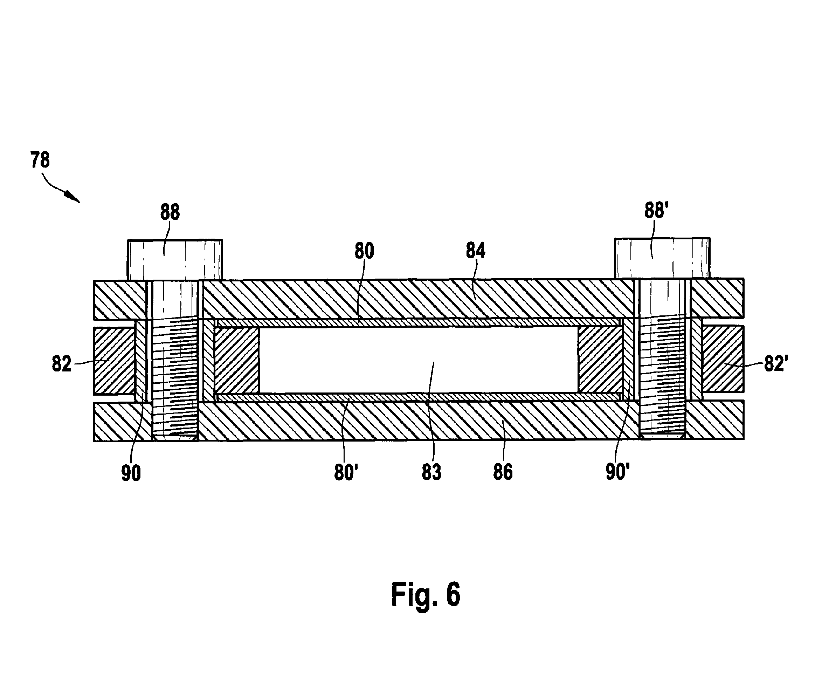

die Figur 6 einen Querschnitt durch die flexible Rinne.

### Beschreibung des Ausführungsbeispiels

Ein eigenständig arbeitendes Applikationsmodul 10 besteht aus einem Gestell 12 mit angeschraubtem Schaltschrank 14, integriertem Bedien- und Anzeigeterminal 16 und eigener Beschutzung. Eine Packstoffrollenaufhängung 18 und ein Schneide- und Klebetisch 20 wird von der bestehenden Verpackungsanlage entkoppelt und am Gestell 12 befestigt. Eine Vorabwicklung 22, die einen Packstoff 13 wie beispielsweise eine Folie kontinuierlich in einen Folienspeicher 24 einträgt, und ein servomotorisch angetriebener Vakuumfolienvorzug 26, der aus dem Folienspeicher 24 den Packstoff 13 intermittierend vorzieht, bilden den Packstoffvorzug. Für die genaue Platzierung des einzusiegelnden Gegenstands wie beispielsweise ein Ventil arbeitet der Folienvorzug 26 mit einer Druckmarkensteuerung 30. Zwischen Folienspeicher 24 und Vakuumfolienvorzug 26 sind eine servomotorisch angetriebene Siegelstation 32 und eine Folieneinschneidstation 34 untergebracht. Zur Reduzierung der Prozesszeit arbeitet die Siegelstation 32 im Ultraschallverfahren mittels einer Ultraschallschweißeinrichtung 36. Ein elektromagnetischer Schwingförderer 38 zur Sortierung und Zuführung der nicht dargestellten einzusiegelnden Gegenstände in die Siegelstation 32 ist auf der Deckplatte des Gestells 12 platziert. Der Signalaustausch zur nachgeschalteten Maschine erfolgt über potenzialfreie Kontakte. Der Siegelstation 32 werden die einzusiegelnden Gegenstände über eine später näher zu beschreibende Zuführrinne 40 vom Schwingförderer 38 zugeführt. Der Siegelstation 32 ist eine Bahnkantensteuerung 44 vorgeschaltet. Die nun mit den eingesiegelten Gegenständen versehene Folie 13 verlässt das eigenständig arbeitende Applikationsmodul 10 über eine Folienweiterführung 42, die beispielsweise mit einer Schwinge zur Aufrechterhaltung der Bahnspannung ausgestattet ist. Eine separate Steuerung für das Applikationsmodul 10 ist in einem Schaltschrank 14, der mit dem Gestell 12 verbunden ist, untergebracht.

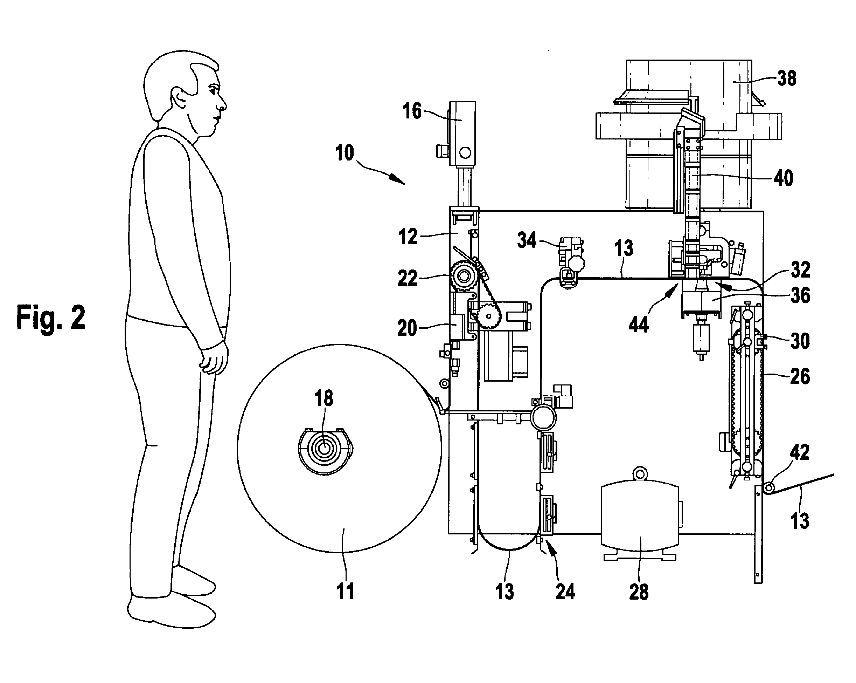

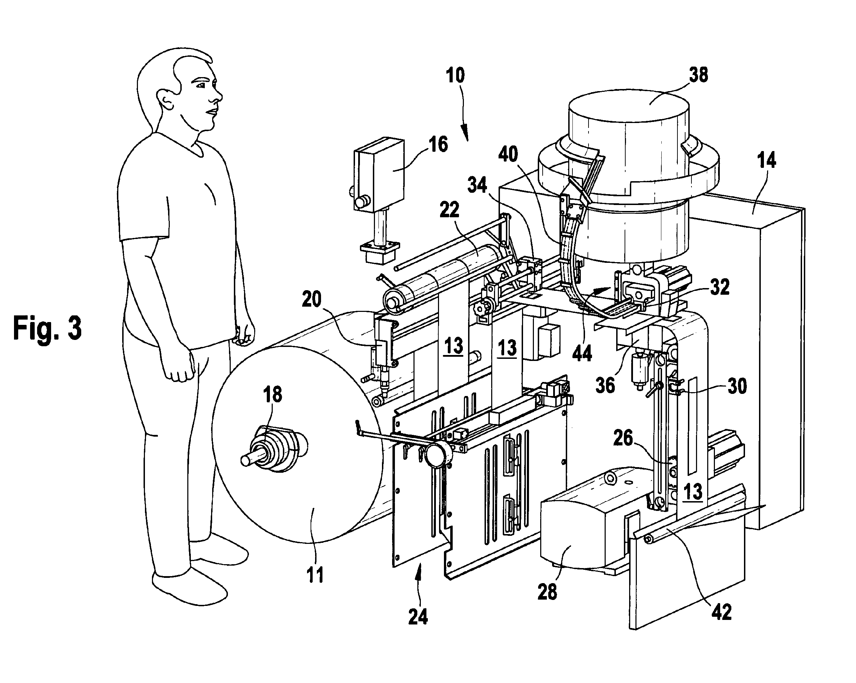

Das eigenständig arbeitende Applikationsmodul 10 dient insbesondere für die Verbindung von innen liegenden Kaffeeentgasungsventilen mit einem Verpackungsmaterial 13 wie beispielsweise eine Folie. Diese Ventile werden über einen Schwingförderer 38 dem Applikationsmodul 10 zugeführt. Der mit den Ventilen versehene Packstoff 13 kann anschließend weiteren Verpackungsmaschinen zugeführt werden wie beispielsweise Schlauchbeutelmaschinen zur Herstellung und Abfüllung eines Kaffeebeutels. Das Vorsehen eines eigenständig arbeitenden Applikationsmoduls 10 vereinfacht das Nachrüsten von bestehenden Verpackungsmaschinen und dient der Entkopplung des vor- und nachgelagerten Prozesses. Wie den Figuren 2 und 3 zu entnehmen, befindet sich die Packstoffrolle 11 in der Packstoffrollenaufhängung 18. Die Folie 13 gelangt über Umlenkrollen zu dem Schneid- und Klebetisch 20. Wird das Ende einer Packstoffrolle 11 erkannt, so dient der Schneid- und Klebetisch 20 der Verbindung der auslaufenden Folienbahn mit dem Anfang einer neuen Folienbahn einer neuen Packstoffrolle 11. Die Folie 13 wird über die Vorabwicklung 23 dem Folienspeicher 24 zugeführt. Erfindungsgemäß eignet sich für Applikationsmodule 10 mit hoher Leistung ein sogenannter Luftsackfolienspeicher. Diese an sich bekannte Folienspeicherart umfasst zudem eine beispielsweise über eine Lichtschranke erfolgende Regelung sowie eine Vakuumbremse zur Aufrechterhaltung der gewünschten Folienspannung. Eine Schikane dient der sauberen Folienführung. Durch den nach dem Luftsackprinzip arbeitenden Folienspeicher 24 lassen sich sehr kurze Vorschubzeiten erzielen. Prinzipiell sind jedoch auch andere Arten bekannter Folienspeicher 24 denkbar. Vom Folienspeicher 24 gelangt die Folie 13 zur Folieneinschneidstation 34. Die Folie 13 wird an der Stelle durchschnitten, wo später in der Siegelstation 32 das Ventil mit der Folie versiegelt verbunden wird. Anschließend wird die Folie intermittierend der Siegelstation 32 zugeführt. Die Ventile gelangen über den Schwingförderer 38 und die Zuführrinne 40 an die Siegelstation 32. Mittels einer Positioniereinrichtung wird das Ventil in die gewünschte Siegelposition gebracht über der Einschnittstelle in der Folie 13. Das Ventil wird einem Siegelstempel zugeführt, der in vertikaler Richtung in eine Siegelposition gebracht wird. In Siegelverfahren kommen beispielsweise thermische Verfahren zum Einsatz, die, konventionell oder über Ultraschall, Wärme erzeugern. Im gezeigten Applikationsmodul 10 kommt erfindungsgemäß eine Ultraschallschweißeinrichtung 36 zum Einsatz, welche sehr kurze Schweißtakte ermöglicht. Grundsätzlich sind jedoch auch andere Verfahren denkbar. Der Vakuumfolienvorzug 26 ist beispielsweise servomotorisch angetrieben und zieht die Folie 13 intermittierend aus dem Folienspeicher 24. Der intermittierende Folienvorzug könnte jedoch auch in anderer Art und Weise als durch Vakuum erzeugt werden. Die Vakuumpumpe 28, die ebenfalls Bestandteil desApplikationsmoduls ist, stellt das benötigte Vakuum zur Verfügung.

Anstelle von Ventilen als einzusiegelnde Gegenstände können auch Wiederverschlüsse, ZIP-Verschlüsse oder dergleichen appliziert werden, welche gesiegelt/geklebt werden, oder aber beliebige andere Gegenstände.

Eine flexible Rinne 78, wie sie beispielsweise in oben beschriebenem Applikationsmodul (dort mit der Bezugszahl 40 bezeichnet) zum Einsatz kommt, beginnt mit einem Einlauf 79 und endet mit einem Auslauf und einer Einspannstelle 81. Ein Hohlraum 83 wird seitlich durch zwei parallel in Längsrichtung angeordnete Leisten 82, 82' (vorzugsweise Kunstoffleisten) sowie oben und unten von flexiblen Federstahlblechen 80, 80' gebildet. In diesem Hohlraum 83 werden die zu fördernden Gegenstände geführt. Die beiden Leisten 82, 82' werden durch in Querrichtung angeordnete Abstandshalter 84, 86, Schrauben 88, 88' und Buchsen 90, 90' miteinander verbunden. Der Abstandshalter 84 weist Bohrungen zur Aufnahme der Schrauben 88, 88' auf, der gegenüberliegende Abstandshalter 86 weist Gewinde zur Aufnahme der Schrauben 88, 88' auf. Die Dicke der Leisten 82, 82' wird bestimmt durch die Dicke des zuzuführenden Gegenstands, die je nach Hersteller variiert. Die Breite der Leiste 82, 82' wird bestimmt von dem erforderlichen Bohrungsdurchmesser und von der gewünschten Biegefähigkeit der flexiblen Rinne 78. Durch die Bohrungen im Abstandshalter 84 werden die Buchsen 90, 90' (Normteil) so eingepresst, dass beidseitig ein gleicher Überstand entsteht. Die beiden Leisten 82, 82' werden über die Abstandshalter 84, 86 auf beiden Seiten durch die Buchsen 90, 90' miteinander verschraubt. Hergestellt werden die Abstandshalter 84, 86 aus stabilem Flachmaterial, das abgesägt und mit zwei Bohrungen (oberer Halter) bzw. zwei Gewinde (unterer Halter) versehen wird. Der Bohrungs-/Gewindeabstand wird bestimmt von dem Durchmesser der zuzuführenden Gegenstände und der Breite der Leisten 82, 82'. Zwischen die Abstandshalter 84, 86 und die Leisten 82, 82' werden die Federstahlbleche 80, 80' geschoben, die seitlich durch die über die Leisten 82, 82' stehenden Buchsen 90, 90'gehalten werden. Der lichte Abstand zwischen zwei gegenüberliegenden Buchsen 90, 90' bestimmt die Breite der Federstahlbleche 80, 80'. Die Dicke wird von der gewünschten Biegewilligkeit der flexiblen Rinne 78 bestimmt und muss kleiner sein als die halbe Differenz zwischen Länge der Buchsen 90, 90' und Dicke der Leisten 82, 82'. Da die Federstahlbleche 80, 80' sich gegenüber den Abstandshaltern 84, 86 und den Leisten 82, 82' verschieben lassen, ist die Rinne 78 biegsam. Federstahlbleche 80, 80' und Leisten 82, 82' werden einseitig miteinander verspannt (Auslauf- und Einspannstelle 81). Auf der anderen Seite (Einlauf 79) findet der Längenausgleich der Federstahlbleche 80, 80' in Folge der Radiusveränderung beim Biegen statt. Der Querschnitt der Rinne 78 ermöglicht eine genaue Aneinanderreihung der zuzuführenden Gegenstände, ohne dass sich diese übereinander schieben oder verkanten, bei gleichzeitiger Flexibilität bei Veränderung der Schweißposition gegenüber der Zuführung. Eines oder beide Federstahlbleche 80, 80' können eine Nut aufweisen zur Sichtkontrolle der zu fördernden Gegenstände. Anstelle von Federstahlbleche können auch andere biegsame Materialien (Kohlefasern, Fieberglas etc.) zum Einsatz kommen, die mit Blick auf einen geeigneten Reibungskoeffizient dem Fachmann für den jeweiligen Einsatz geläufig sind.

Die flexible Rinne 78 eignet sich vorzugsweise für die Zuführung von einzusiegelnden Gegenständen von dem Schwingförderer 38 zu der Siegelstation 32, ist jedoch hierauf nicht eingeschränkt.

## Patentansprüche

1. Flexible Rinne für die Zuführung von Gegenständen, zumindest umfassend:
- zwei im Wesentlichen in Längsrichtung parallel zueinander ausgerichteten flexiblen Leisten (82, 82') zur seitlichen Begrenzung von zuzuführenden Gegenständen,
- zwischen den Leisten (82, 82') angeordnetes flexibles Material (80, 80') zur Bildung einer Führung für zuzuführende Gegenstände zusammen mit den Leisten (82, 82'),
- Befestigungsmittel (84, 86, 88, 88', 90, 90') zur Verbindung der Leisten (82, 82') und des flexiblen Materials (80,80') miteinander, wobei die Befestigungsmittel (84, 86, 88, 88', 90, 90') eine Bewegung des flexiblen Materials (80, 80') relativ zu den Leisten (82, 82') zulassen, wobei in einer Bohrung der Leiste (82, 82') eine Buchse (90, 90') angeordnet ist,
**dadurch gekennzeichnet, dass** die Buchse (90, 90') eine seitliche Begrenzung für das flexible Material (80, 80') darstellt.

2. Vorrichtung nach Anspruch 1, **dadurch gekennzeichnet, dass** als Befestigungsmittel (84, 86, 88, 88', 90, 90') zumindest ein Abstandshalter (84, 86) verwendet ist.

3. Vorrichtung nach einem der vorhergehenden Ansprüche, **dadurch gekennzeichnet, dass** die Befestigungsmittel (84, 86, 88, 88', 90, 90') quer zur Längsrichtung Druck auf das flexible Material (80, 80') ausüben.

4. Vorrichtung nach einem der vorhergehenden Ansprüche, **dadurch gekennzeichnet, dass** die beiden Leisten (82, 82') über Abstandshalter (84, 86) auf beiden Seiten miteinander verschraubt sind.

5. Vorrichtung nach einem der vorhergehenden Ansprüche, **dadurch gekennzeichnet, dass** zumindest eine Buchse (90, 90') in zumindest einer Leiste (82, 82') eingepresst ist.

6. Vorrichtung nach einem der vorhergehenden Ansprüche, **dadurch gekennzeichnet, dass** Leisten (82, 82') und flexibles Material (80, 80') auf einer Seite der flexiblen Rinne (78) miteinander verspannt sind.

7. Vorrichtung nach einem der vorhergehenden Ansprüche, **dadurch gekennzeichnet, dass** als flexibles Material (80, 80') biegsamer Stahl, insbesondere ein Federstahlblech verwendet ist.

8. Vorrichtung nach einem der vorhergehenden Ansprüche, **dadurch gekennzeichnet, dass** als flexible Leisten (82, 82') Kunststoffleisten verwendet sind.

9. Vorrichtung nach einem der vorhergehenden Ansprüche, **gekennzeichnet durch** die Verwendung der flexiblen Rinne (78) zur Zuführung von Gegenständen zu einer Siegelstation (32).

## Claims

1. Flexible channel for the delivery of articles, at least comprising:
- two flexible battens (82, 82'), oriented parallel to one another essentially in the longitudinal direction, for the lateral limitation of articles to be delivered,
- flexible material (80, 80'), arranged between the battens (82, 82'), for forming a guide for the articles to be delivered, together with the battens (82, 82'),
- fastening means (84, 86, 88, 88', 90, 90') for connecting the battens (82, 82') and the flexible material (80, 80') to one another, the fastening means (84, 86, 88, 88', 90, 90') permitting a movement of the flexible material (80, 80') in relation to the battens (82, 82'), a bush (90, 90') being arranged in a bore of the batten (82, 82'), **characterized in that** the bush (90, 90') constitutes a lateral limitation for the flexible material (80, 80').

2. Device according to Claim 1, **characterized in that** at least one spacer (84, 86) is used as fastening means (84, 86, 88, 88', 90, 90').

3. Device according to one of the preceding claims, **characterized in that** the fastening means (84, 86, 88, 88', 90, 90') exert pressure upon the flexible material (80, 80') transversely with respect to the longitudinal direction.

4. Device according to one of the preceding claims, **characterized in that** the two battens (82, 82') are screwed to one another on both sides via spacers (84, 86).

5. Device according to one of the preceding claims, **characterized in that** at least one bush (90, 90') is pressed into at least one batten (82, 82').

6. Device according to one of the preceding claims, **characterized in that** battens (82, 82') and flexible material (80, 80') are braced with one another on one side of the flexible channel (78).

7. Device according to one of the preceding claims, **characterized in that** pliable steel, in particular a spring steel sheet, is used as flexible material (80, 80').

8. Device according to one of the preceding claims, **characterized in that** plastic battens are used as flexible battens (82, 82').

9. Device according to one of the preceding claims, **characterized by** the use of the flexible channel (78) for the delivery of articles to a sealing station (32).

## Revendications

1. Conduit flexible pour acheminer des objets, comprenant au moins :
- deux baguettes flexibles (82, 82') orientées essentiellement parallèlement l'une à l'autre dans la direction longitudinale, pour limiter latéralement des objets à acheminer,
- un matériau flexible (80, 80') disposé entre les baguettes (82, 82') pour former un guide pour les objets à acheminer conjointement avec les baguettes (82, 82'),
- des moyens de fixation (84, 86, 88, 88', 90, 90') pour relier les baguettes (82, 82') et le matériau flexible (80, 80') les uns aux autres, les moyens de fixation (84, 86, 88, 88', 90, 90') permettant un déplacement du matériau flexible (80, 80') par rapport aux baguettes (82, 82'), une douille (90, 90') étant disposée dans un alésage des baguettes (82, 82'),
**caractérisé en ce que** la douille (90, 90') constitue une limite latérale pour le matériau flexible (80, 80').

2. Dispositif selon la revendication 1, **caractérisé en ce que** l'on utilise comme moyens de fixation (84, 86, 88, 88', 90, 90') au moins un dispositif d'espacement (84, 86).

3. Dispositif selon l'une quelconque des revendications précédentes, **caractérisé en ce que** les moyens de fixation (84, 86, 88, 88', 90, 90') exercent une pression transversalement à la direction longitudinale sur le matériau flexible (80, 80').

4. Dispositif selon l'une quelconque des revendications précédentes, **caractérisé en ce que** les deux baguettes (82, 82') sont vissées l'une à l'autre des deux côtés par le biais de dispositifs d'espacement (84, 86).

5. Dispositif selon l'une quelconque des revendications précédentes, **caractérisé en ce qu'**au moins une douille (90, 90') est pressée dans au moins une baguette (82, 82').

6. Dispositif selon l'une quelconque des revendications précédentes, **caractérisé en ce que** les baguettes (82, 82') et le matériau flexible (80, 80') sont serrés ensemble d'un côté du conduit flexible (78).

7. Dispositif selon l'une quelconque des revendications précédentes, **caractérisé en ce que** l'on utilise comme matériau flexible (80, 80') de l'acier flexible, notamment une tôle d'acier à ressort.

8. Dispositif selon l'une quelconque des revendications précédentes, **caractérisé en ce que** l'on utilise comme baguettes flexibles (82, 82') des baguettes en plastique.

9. Dispositif selon l'une quelconque des revendications précédentes, **caractérisé par** l'utilisation du conduit flexible (78) pour acheminer des objets à un poste de scellement (32).
